# EUROPEAN PATENT APPLICATION

(11) **EP 1 302 799 A2**
(43) Date of publication of application: **16.04.2003**
(21) Application number: 02256979.2
(22) Date of filing: 04.10.2002
(51) Int. Cl.: G02B 6/44

(54) **Storage system for optical fiber splices**

(30) Priority: 09.10.2001 GB 0124228
(71) Applicant: SPIRENT PLC, Crawley, West Sussex RH10 2QL (GB)
(72) Inventor: Foss, Raymond Charles, Peverell, Plymouth PL3 4NX (GB); Marshall, Christopher, Ivybridge, Devon PL21 9UN (GB)
(74) Representative: Evans, Huw David Duncan

(57) **Abstract**

An optical fibre splice storage enclosure comprises a base 10 having a plurality of cable entry ports 11, a cover 12 for fitting to the base 10 and a stack 13 of trays 14 mounted to a support which extends 15 from the base 10.

The support has a plurality of locations 17 along its lenght for receiving either one thick tray 14 having a large number of locations for storing optical fibre splices or two thin trays 14 each having a smaller number of locations for storing optical fibre splices.

Splices for larger capacity optical fibre cables or large subscriber areas can be accommodated in respective large capacity trays whilst the splices for smaller capacity optical fibre cables or small subscriber areas can be accommodated in respective small capacity trays in the same stack 13.

## Description

This invention relates to an optical fibre splice storage system.

Optical fibre splices and other elements connecting the ends of optical fibres are generally mounted in a flat tray, which is arranged in a stack inside an enclosure with other such trays.

Usually one tray holds the splices between say a main cable and a branch cable feeding a particular residential area or customer, whilst the other trays hold splices between the main cable and other areas or customers. In this manner the trays and splices are neatly organised and are easily identifiable.

The number of splices to be contained in each tray varies depending on the application and on the number of fibres carried in the cable. Generally only the same types of cable are used in any particular application and thus an engineer is able to choose an enclosure having a suitable splice capacity to suit the application.

In mixed applications or in the case of applications where different capacity cables are used, this creates a problem, since enclosures having large capacity trays do not have enough trays for an organised layout of the splices to be achieved and enclosures having a large number of small capacity trays will not have a tray of sufficient capacity to carry the splices between fibres of a larger cable.

We have now devised an optical fibre splice storage system which alleviates the above-mentioned problems.

In accordance with this invention there is provided an optical fibre splice storage enclosure comprising a base having a plurality of cable entry ports, a cover for fitting to the base and a plurality of tray members mounted to the base and sealingly contained within the cover, wherein at least one of the tray members has a different number of locations for storing optical fibre splices than the or each other tray member of the enclosure.

In this manner the splices for larger capacity cables or areas can be accommodated in respective large capacity trays whilst the splices for smaller capacity cables or areas can be accommodated in respective small capacity trays.

Preferably the tray members are arranged in a stack, with each stack comprising tray members having different capacities.

Preferably the different capacity tray members are of a different thickness.

Preferably a small capacity tray member comprises a single tray, the larger capacity tray member comprising two trays mounted back-to-back.

Preferably the tray members are pivotally mounted to a support, the support comprising a plurality of locations along its length for pivotally receiving respective tray members of the stack.

Preferably the locations each comprise a first portion and a second portion which are offset from each other with respect to the pivotal axis thereof, each location being arranged to receive two trays in the first and second portions respectively, the trays comprising formations which engage with said formations and which are asymmetrically disposed on one edge thereof.

In one embodiment two front-to-back trays having oppositely asymmetrical formations can be respectively engaged into the first and second portions of one location.

In an alternative embodiment two back-to-back identical trays can be respectively engaged into the first and second portion of one location.

Preferably the trays are arranged to pivot about an axis which extends along one edge thereof in a plane which lies in line with or below the plane of the underside of the tray.

Preferably the support comprises an elongate support member, and at least one mounting member attached thereto and provided with one or more of said locations.

In use, the user can add as many mounting members to the support member as are required for the particular application. If necessary, further mounting members can be added at a later stage when it is desired to increase the capacity of the enclosure.

Preferably, locations are provided on opposite sides of the support, so that it can carry two stacks of trays.

Also in accordance with this invention, there is provided a kit of parts for forming an optical fibre splice enclosure, the kit comprising a base having a plurality of cable entry ports, a cover for fitting to the base and a plurality of tray members for mounting to the base, at least one of the tray members having a different number of locations for storing optical fibre splices than the or each other tray member of the kit.

Preferably the kit includes an elongate support for fitting to the base and for mounting the trays in a stack which extends axially of the cover when the latter is fitted to the base.

Preferably the kit includes a plurality of elongate supports of different lengths for respectively mounting a different number of trays.

Preferably the kit includes a plurality of mounting members for fitting to the support, each mounting member having a predetermined number of locations to which the trays can be pivotally mounted.

Preferably the kit includes a plurality of covers, each having a different length for respectively containing a different sized stack.

Embodiments of the invention will now be described by way of examples only and with reference to the accompanying drawings, in which:
Figure 1 is a transverse sectional view through an embodiment of optical fibre splice storage enclosure in accordance with the invention;
Figure 2 is a sectional view along the line II-II of Figure 1;
Figure 3 is a front view of a mounting member of the enclosure of Figure 1;
Figure 4 is a side view of the mounting member of Figure 3;
Figure 5 is a plan view of a first tray of the enclosure of Figure 1;
Figure 6 is a side view of the tray of Figure 5;
Figure 7 is a side view of two trays of the type shown in Figure 6, mounted back-to-back;
Figure 8 is a plan view of a second tray of the enclosure of Figure 1;
Figure 9 is a side view of a portion of a stack of trays of the enclosure of Figure 1; and
Figure 10 is a longitudinal sectional view through an alternative embodiment of optical fibre splice storage enclosure in accordance with this invention.

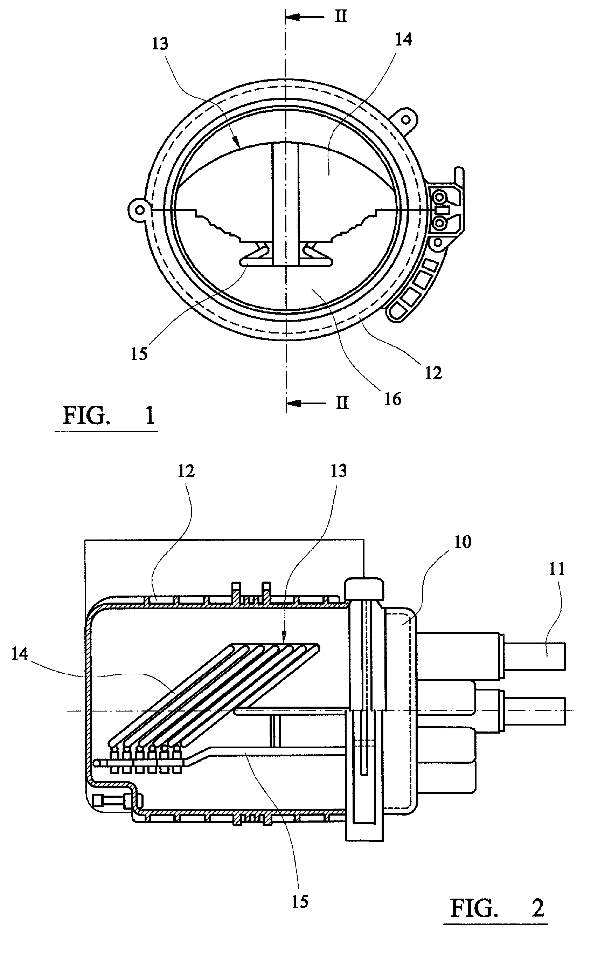

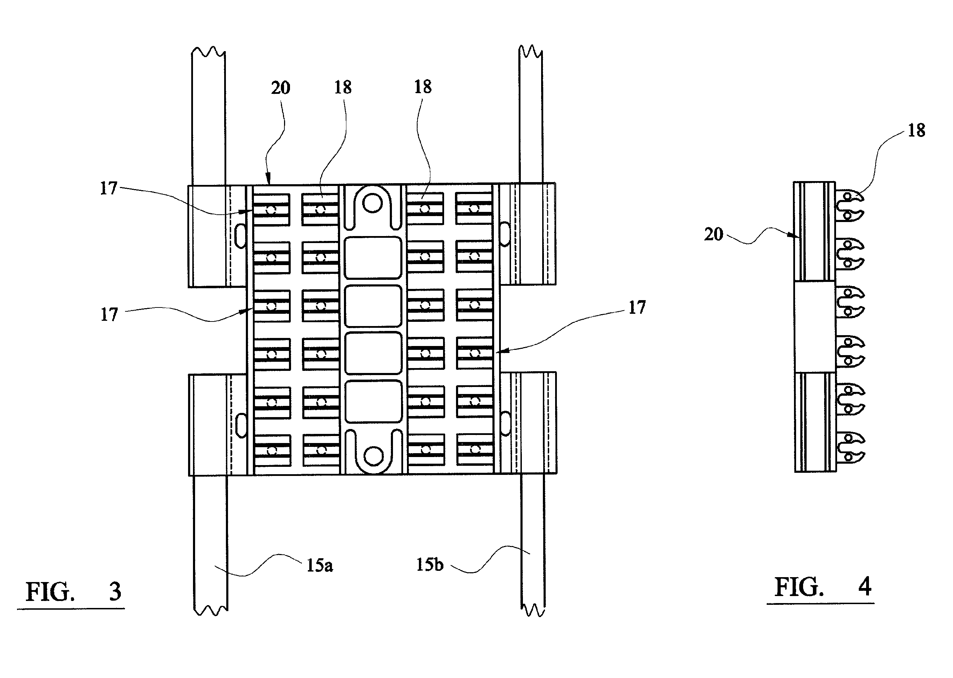

Referring to Figures 1 and 2 of the drawings, there is shown an optical fibre splice storage enclosure comprising a circular base 10 having a plurality of tubular cable entry ports 11 extending from one side thereof. A tubular cap-end cover 12 is provided for fitting to the opposite side of the base 10, to sealingly contain a stack 13 of trays inside the enclosure.

Each tray is mounted to an elongate support 15 which extends axially of the cover 12, with each tray being disposed at an inclined angle to the longitudinal axis of the stack. Each tray 14 is generally elliptical in shape, so that the stack 13 fits closely within the cover 12, to one side thereof. A space 16 extends along the opposite side of the cover to allow fibres to pass between the trays 14 and the base 10.

Referring to Figures 3 and 4 of the drawings, the support member 15 comprises two parallel upright metal rods 15a, 15b. A plastics mounting member 19 is snap-engaged between the metal rods 15a, 15b and comprises a plurality of locations 17 for receiving respective trays 14 of the stack 13. Each location 17 comprises four pairs of fingers 18 arranged in a row with the first and third pair defining a first location portion and the second and fourth pair defining a second location portion.

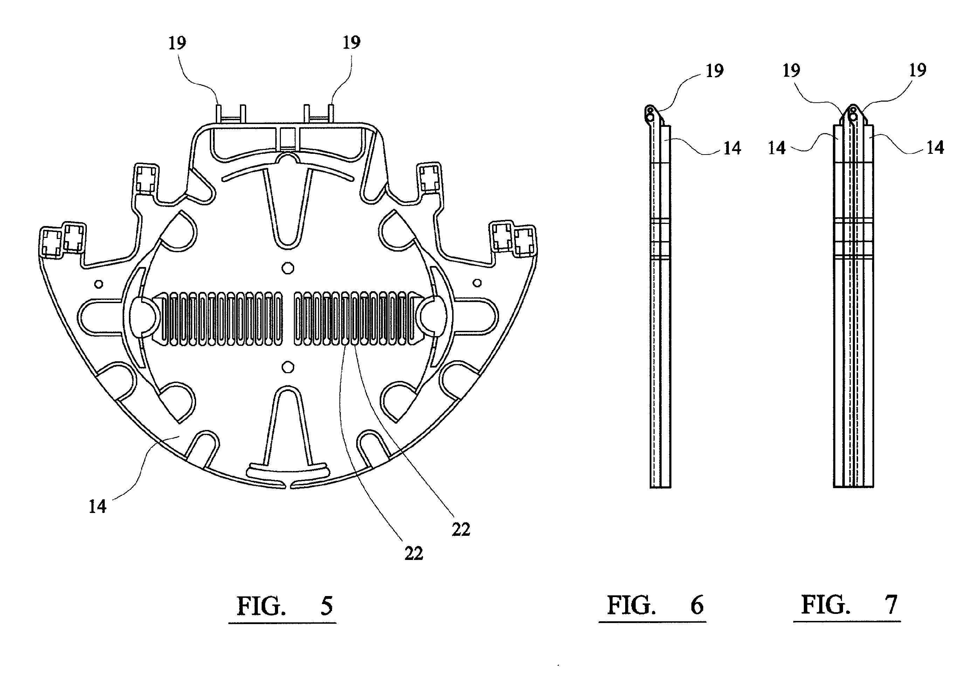

Referring to Figures 5 and 6 of the drawings, each tray is generally elliptical in shape and comprises a pair of mounting lugs 19 projecting from its rear edge. The mounting lugs 19 each comprise an axle which co-extend with each other along a pivotal axis lying parallel to the long axis of the tray and in the same plane as the underside of the tray. The lugs 19 are spaced apart from each other by a distance which corresponds with the spacing between the fingers 18 of the first or the second portion of the location 17 on the mounting member 20.

In the example shown the lugs 19 are asymmetrically disposed about a line which extends along the centre of the short axis of the tray, such that they can be engaged with the fingers 18 of the first portion of one of the locations 17: it will be appreciated that a tray having lugs 19, the position of which are a mirror image of the lugs of the tray of Figure 5, can be engaged with the fingers 18 of the second portion of one of the locations 17.

Referring to Figure 7 of the drawings, when two trays of the type shown in Figure 5 are mounted back-to-back, the axles of the respective lugs 19 align co-axially and the two trays can be engaged into one location, with their lugs 19 being received by the first and second portions of the location 17 respectively.

Alternatively, a tray of the type shown in Figure 5 and a similar tray having the lugs in the opposite position and lying in the plane of the top of the tray, can also be engaged into one location 17 on the mounting member 20. Two trays can be mounted in each of the locations 17 of the mounting member 20, since the distance between each location is slightly greater than the thickness of the trays.

Trays of the aforementioned type are relatively shallow (e.g. 3.5mm) and as such are only able to hold one splice between each splice storage finger 22.

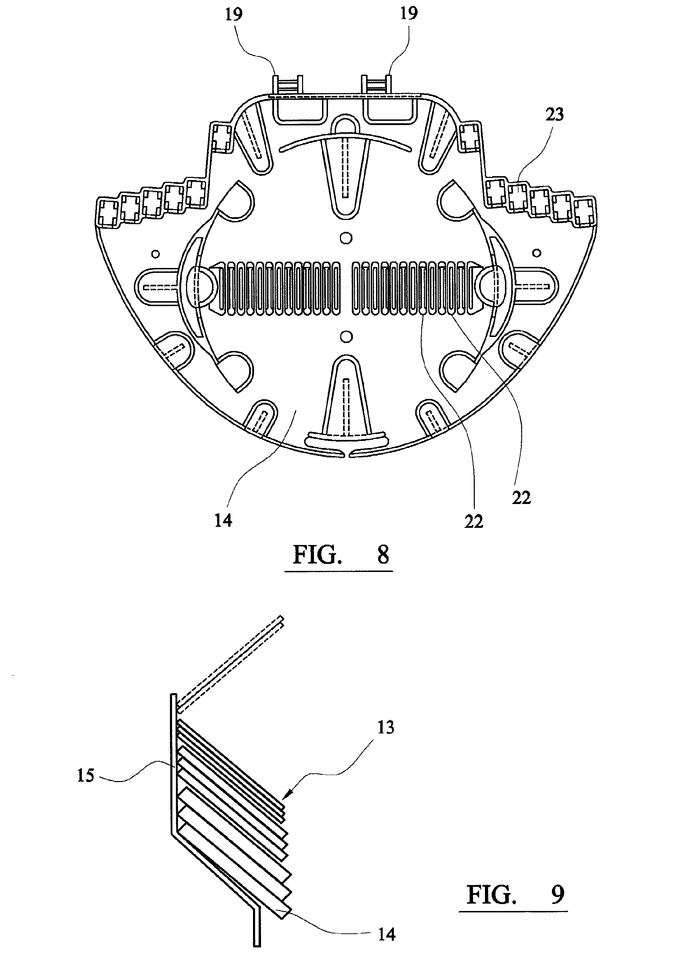

Referring to Figure 8 of the drawings, there is shown a deeper tray of say 7 or 14mm in depth, which is able to hold several splices between each splice storage finger 22. The larger trays are also provided with more entry ports 23 for optical fibres to enter the tray. In the case of 7mm trays, one tray can be mounted in each location 17 on the mounting member 20, whilst the 14mm trays can only be mounted in every other location 17.

Referring to Figure 9 of the drawings, a stack of trays can thus be formed using trays of a variety of thicknesses and configurations. Further mounting members 20 can be added to the support member 15 to increase the number of trays 14 in the stack 13.

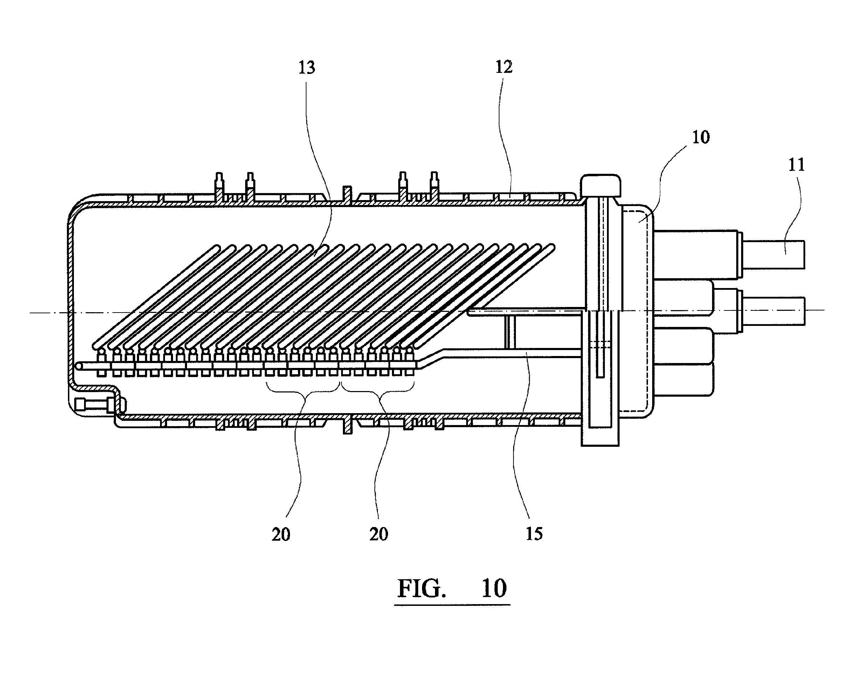

Referring to Figure 10, the capacity of the enclosure can be increased by providing a longer support member 15 and adding further mounting members 20. A longer cover 12 is then provided to enclose the larger stack.

It will be appreciated that an enclosure in accordance with this invention can be used for a wide variety of applications and can be expanded if necessary to accommodate more trays.

## Claims

1. An optical fibre splice storage enclosure comprising a base having a plurality of cable entry ports, a cover for fitting to the base and a plurality of tray members mounted to the base and sealingly contained within the cover, wherein at least one of the tray members has a different number of locations for storing optical fibre splices than the or each other tray member of the enclosure.

2. An optical fibre splice storage enclosure as claimed in claim 1, in which the tray members are arranged in a stack, with each stack comprising tray members having different capacities.

3. An optical fibre splice storage enclosure as claimed in claims 1 or 2, in which the different capacity tray members are of a different thickness.

4. An optical fibre splice storage enclosure as claimed in claim 3, in which a small capacity tray member comprises a single tray, the larger capacity tray member comprising two trays mounted back-to-back.

5. An optical fibre splice storage enclosure as claimed in any preceding claim, in which the tray members are pivotally mounted to a support, the support comprising a plurality of locations along its length for pivotally receiving respective tray members of the stack.

6. An optical fibre splice storage enclosure as claimed in claim 5, in which the locations each comprise a first portion and a second portion which are offset from each other with respect to the pivotal axis thereof, each location being arranged to receive two trays in the first and second portions respectively, the trays comprising formations which engage with said formations and which are asymmetrically disposed on one side thereof.

7. An optical fibre splice storage enclosure as claimed in claim 6, in which two front-to-back trays having oppositely asymmetrical formations are respectively engaged into the first and second portions of one location.

8. An optical fibre splice storage enclosure as claimed in claim 6, in which two back-to-back identical trays can be respectively engaged into the first and second portions of one location.

9. An optical fibre splice storage enclosure as claimed in any of claims 5 to 8, in which the support comprises an elongate support member, and at least one mounting member attached thereto and provided with one or more of said locations.

10. An optical fibre splice storage enclosure as claimed in claim 9, in which locations are provided on opposite sides of the support, so that it can carry two stacks of trays.

11. An optical fibre splice storage enclosure as claimed in any preceding claim, in which the trays are arranged to pivot about an axis which extends along one edge thereof in a plane which lies in line with or below the plane of the underside of the tray.

12. A kit of parts for forming an optical fibre splice enclosure, the kit comprising a base having a plurality of cable entry ports, a cover for fitting to the base and a plurality of tray members for mounting to the base, at least one of the tray members having a different number of locations for storing optical fibre splices than the or each other tray member of the kit.

13. A kit as claimed in claim 12, including an elongate support for fitting to the base and for mounting the trays in a stack which extends axially of the cover when the latter is fitted to the base.

14. A kit as claimed in claims 12 or 13, including a plurality of elongate supports of different lengths for respectively mounting a different number of trays.

15. A kit as claimed in any of claims 12 to 14, including a plurality of mounting members for fitting to the support, each mounting member having a predetermined number of locations to which the trays can be pivotally mounted.

16. A kit as claimed in any of claims 12 to 15, including a plurality of covers, each having a different length for respectively containing a different sized stack.

17. A kit as claimed in any of claims 12 to 14, in which the different capacity tray members are of a different thickness.
